# EUROPEAN PATENT APPLICATION

(11) **EP 2 618 017 A1**
(43) Date of publication of application: **24.07.2013**
(21) Application number: 13151175.0
(22) Date of filing: 14.01.2013
(51) Int. Cl.: F16F 7/08, F16F 7/09

(54) **Friction damper with friction adjusting means**

(30) Priority: 23.01.2012 IT PN20120003
(71) Applicant: Ro-Sa Plast S.p.A., 33080 Porcia (PN) (IT)
(72) Inventor: Sandrin, Giannino, 33080 Porcia (PN) (IT)
(74) Representative: Giugni, Valter

(57) **Abstract**

The present invention refers to a friction damper (1) extending longitudinally along an axis (X-X), comprising a hollow body (2) provided with a first closed end (22) on which is provided an anchoring element (23) and a second open end (24), a rod (3) designed to slidably engage the internal wall of said hollow body (2) and equipped with a first closed end (31) on which is provided an anchoring element (32) and is connected to a second end (33) that engages the cavity of the hollow body (2) through a middle portion (34), and at least one friction element (4) interposed between the internal wall of the hollow body and the external wall of the rod, wherein said second end (33) of the rod (3) is provided with flexible arms (36) for holding said friction element (4), the free ends (37) of which include adjustable and reversible joining means (38, 39) to lock said arms (36) in a position wherein they create a greater or lesser compression of said friction element (4) automatically regulating the braking effect of the friction damper.

## Description

### TECHNICAL FIELD OF INVENTION

The present invention refers to a friction damper, in particular for laundry treatment machines, such as dryers, washing-drying machines and laundry washing machines, comprising an adjustable friction system.

### BACKGROUND OF THE INVENTION

As is well known, laundry treatment machines generally include a housing frame containing a laundry treatment unit comprising a tub and a drum, an electric motor, one or more ballast elements and a set of drive and control devices that regulate their operation.

In front-loading and top-loading machines having an axis of rotation of the drum horizontal to the support plane, the laundry treatment unit is usually suspended within the frame of the machine through a pair of springs, and is anchored to the frame at the bottom through one or more pairs of dampers.

The dampers have the function of dampening the oscillations/vibrations to which the laundry treatment unit is subjected during the operation of the washing machine, both by the effect of rotation of the drum around its own axis and of the unbalances caused by an uneven distribution of the load inside the drum.

In particular, the vibrations of the laundry treatment unit are stronger at the beginning and at the end of the centrifugation operations, when there is a greater variation in the rotational speed of the drum, while they are weaker or almost absent in the steady-state condition of rotation.

Among the dampers currently available on the market, friction dampers generally consist of a hollow body closed at one end and a rod, coaxial to the body and sliding inside cavity of the hollow body.

Said friction dampers also have one or more friction elements between the inside wall of the body and the external surface of the rod. Generally, said elements are fastened either on the surface of the body or on the surface of the rod and are suitable to cooperate with the other surface to apply a frictional force sufficient to dampen the oscillations of the drum.

These friction elements are bands of spongy polymeric material such as, for example, foam polyurethane. The bands are, in particular, fastened in a specific position and held there in a seat delimited, for example, by holding flanges that restrain their movement in an axial direction.

In addition, the contact surfaces on the hollow body and on the rod on which the friction elements operate are covered with oil or grease having the function of facilitating their sliding movement and of lubricating the same elements so as to avoid heating and wearing down of the parts caused by friction.

A particular type of friction damper is described in the American Patent Application US 2010/0252382. This damper has a generally rectangular cross section and is **characterized in that** it includes a rod having an end provided with a seat for receiving a friction element. The friction element is in turn provided with a seat designed to hold an expansion element.

In particular, the seat of the friction element has an annular shape that encircles the friction element itself so that it protrudes from its two opposite planes and can thus exert a frictional force against the internal walls of the hollow body, once the rod is inserted therein.

In order to control the frictional force, an expansible body can be inserted into the seat of the friction element so as to expand it and thereby increase said protrusion. This damper is thus capable of adjusting the expansion function to suit the requirement of increasing or decreasing the frictional force.

Nevertheless, this adjustment must be carried out with laborious operations, as it requires the friction element to be disassembled in order to insert or remove said expansible body. Moreover, if a greater range of adjustments is desired, it is necessary to arrange a series of expansible bodies provided with different expansion capabilities.

### SUMMARY OF THE INVENTION

The main objective of the subject matter of the present invention is to overcome the above-mentioned shortcomings, in particular by providing an adjustable friction or braking damper for laundry treatment machines provided with simple and functional technical solutions.

This objective is achieved by a particular change in the seat of the friction element that makes it possible to adjust in a simple manner the frictional capability of the same element while avoiding the use of expansible bodies.

### BRIEF DESCRIPTION OF THE FIGURES

The advantages and characteristics of the invention will become evident through the following description, given by way of non-limiting example, with reference to the enclosed figures, wherein:
- figure 1A is an exploded axonometric view of the friction damper according to the present invention;
- figure 1B is a cross-sectional view of the hollow body of the friction damper of figure 1A with an enlarged detail;
- figure 2A is a plan view of the rod with the friction element of the damper of figure 1, in a first operating condition;
- figure 2B is a side view of the rod with the friction element of figure 2A;
- figure 3A is a plan view of the rod with the friction element of the damper of figure 1, in a second operating condition;
- figure 3B is a side view of the rod with the friction element of figure 3A;
- figure 4A is an enlarged cross-sectional view of a detail of the friction damper of the invention in a first operating condition;
- figure 4B is an enlarged cross-sectional view of a detail of the friction damper of the invention in a second operating condition;
- figure 5 is an axonometric view of the friction damper of figure 1 in the assembled state.

### DETAILED DESCRIPTION OF THE INVENTION

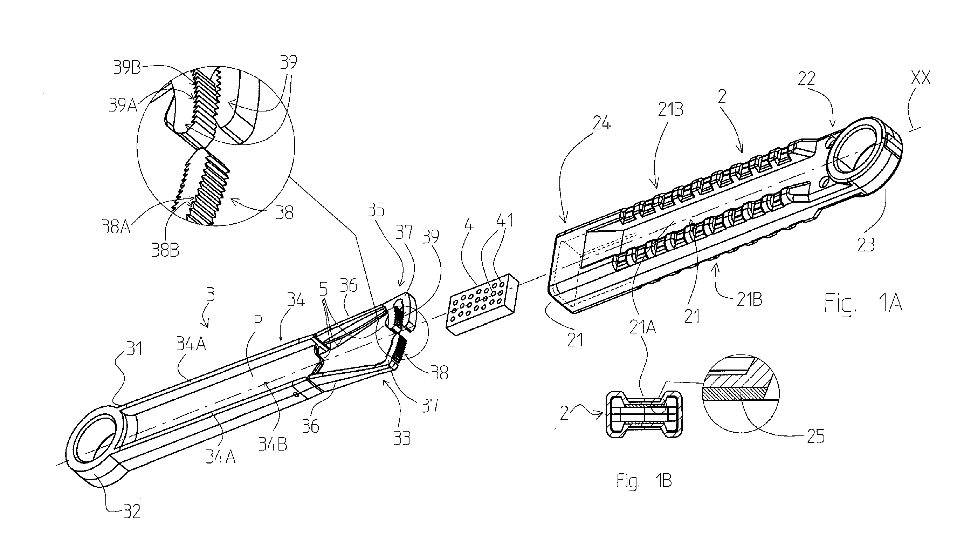

With reference to figure 1, number 1 indicates on the whole a friction damper that extends longitudinally along an axis X-X. The damper 1 comprises a hollow body 2, a rod 3 suitable to slidably engage the inside wall of said hollow body 2 and at least one friction element 4 interposed between the inside wall of the hollow element and the outside wall of the rod to provide the necessary frictional force.

Preferably, the hollow body 2 has a generally rectangular cross section with two opposite larger walls 21 provided with an inwardly recessed middle portion 21 A designed to engage the frictional element and two lateral portions 21 B that are perforated to allow heat loss. The hollow body 2 also includes a first closed end 22 on which is provided an anchoring element 23, such as a loop, suitable to fasten the damper 1 to a conventional housing or frame (not shown) of a laundry treatment machine. A second end 24 is open to be engaged with the rod 3. Preferably, the internal surface of the larger walls 21 of the hollow rectangular body 2 can be lined with a suitable layer of material having a high resistance to wear, such as for example a metal foil or shell like an aluminium sheet, possibly coated, or a film of thermoplastic polymeric material. As shown in figure 1B, the cross section of the hollow body 2 shows the presence, on the inside wall of the recessed middle portion 21 A, of a layer 25 of said wear-resistant material suitable to favour the slidability of the friction element 4.

The rod 3 includes a first end 31 on which is provided an anchoring element 32, for example a loop, designed to be fastened to the tub of the machine, connected to a second end 33 that engages the cavity of the hollow body 2 through a middle portion 34.

In particular, the second end 33 comprises a loop-shaped portion 35 suitable to receive and retain reversibly the friction element 4. The portion 35 is preferably formed by two flexible arms 36 provided with respective free ends 37, each of which is provided with adjustable reciprocal joining means 38, 39. These joining means allow the adjustable joining of the ends so as to hold the two arms 36 closer or farther from each other, as may be required, as will be described later. The joining means 38, 39 can also be in the form of any reversible and adjustable joining system.

According to a preferred embodiment of the invention, such means are shape coupling joining means. As shown in the enlargement of figure 1, the joining means are made up of a toothed pin 38 that is engaged between two corresponding toothed jaws 39. The engagement is thus achieved by the coupling of the teeth on the pin 38 with the teeth on the jaws 39.

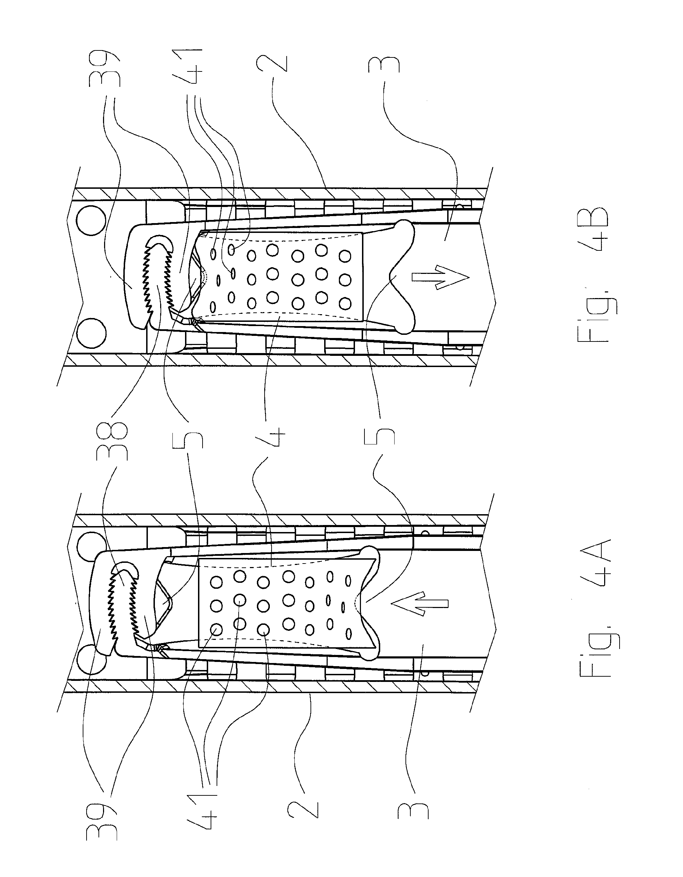

Advantageously, the teeth on the pin have a pushing surface 38A inclined in the direction of engagement and a corresponding undercut 38B, while the teeth on the jaws have similar pushing surfaces 39A inclined in the opposite direction and corresponding undercuts 39B. In this manner, when the pin 38 is pushed into the space delimited by the jaws its teeth push against the teeth of the jaws and spreads them apart. Once past the respective pushing surfaces, the jaws close and the teeth on the pin and the ones on the jaws lock, thanks to the abutting of said undercuts (figures 4A and 4B).

In particular, the locking of the elements is guaranteed by the shape of the teeth, which, as explained, allows the pin to be inserted between the jaws in one direction but prevents its being drawn out in the opposite direction.

To release the joining means 38, 39, it is sufficient to move the free ends 37 of each of the two arms 36 to different planes so as to free the undercuts from their respective engagements. In other words, the pin 38 and the jaws 39 are shifted along an axis perpendicular to their engagement axis.

Advantageously, moreover, the loop-shaped portion 35 comprises pushing or abutting elements 5 that exert an action on the friction element 4 and cause it to bulge, as will be better described later. Said elements 38 can be represented by ribs protruding toward the centre of the loop-shaped portion 35 and having an appropriate shape to work as pushing elements without damaging the friction element. Preferably, the ribs are arranged in two pairs, one with the respective ribs that face each other along the X-X axis of the damper and the other with the respective ribs that face each other perpendicularly to said axis, as shown in figure 1.

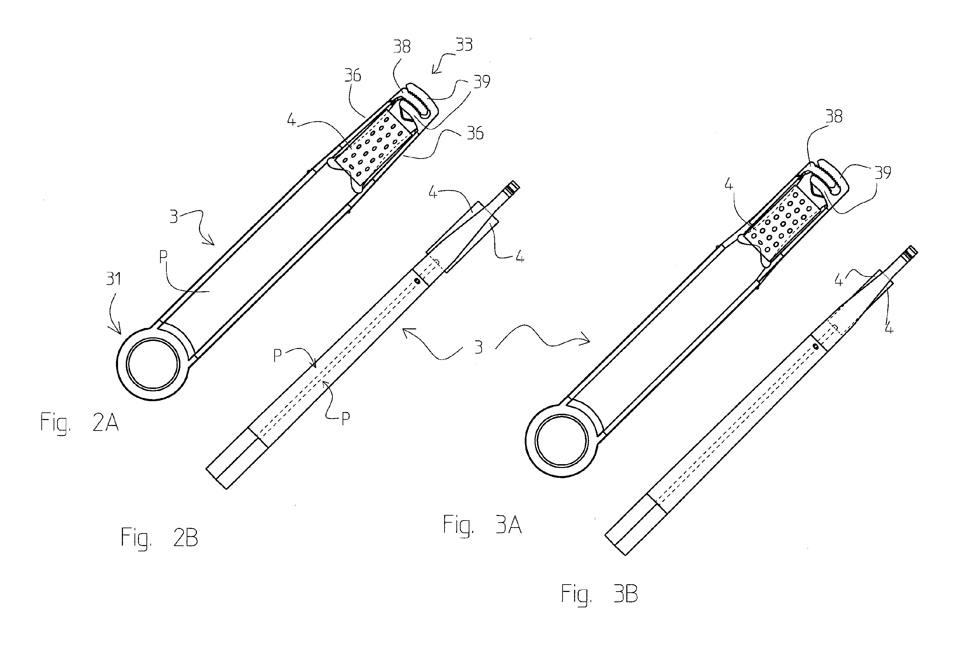

The middle portion 34 preferably includes a plate 34B whose longitudinal edges are integral to two ribs 34A projecting with respect to the two opposing planes P defined by the plate and continuous with the arms 36. Preferably, the ribs 34A have a tapered progression from the first end 31 to the second end 33 of the rod (figures 2B, 3B).

The friction element 4 is preferably a tampon of parallelepiped shape made, for example, of polymeric material such as foam polyurethane and inserted between the two arms 36 of the portion in the shape of a loop 35 of the end 33 of the rod 3 and held therein so as to bulge with respect to both sides of the two planes P of the plate 34B.

Advantageously, the friction element 4 is provided with a plurality of through holes 41. The holes have the double function of a heat sink that dissipates the heat generated when in operation and of a reservoir that releases the lubricant during the whole life cycle of the damper. In this manner, the lubricant reaches all the portions of the friction element 4, keeping it appropriately lubricated without piling up excessively in specific areas and making it unusable.

With reference to figures 2A and 2B, the rod 3 is shown in a first operating condition. In particular, the pin 38 is completely inserted within the jaws 39. In this condition, the friction element 4 is compressed so as to display the maximum bulging from the planes P, thanks to the pushing elements 5 that push against the thickness of the wall of the friction element itself. The maximum bulge corresponds to a maximum required frictional force.

In figures 3A and 3B is shown the rod in a second operating condition. As can be seen, the pin 38 engages only partially the jaws 39 and, consequently, the pushing elements 5 do not compress the friction element 4 completely. The friction element itself, therefore, bulges from the planes P to a lesser extent with respect to the previous condition. Consequently, the frictional force will be smaller.

Further conditions in addition to those previously described will be possible simply by varying the degree of engagement of the pin 38 with the jaws 39, thanks to the presence of a series of teeth and corresponding undercuts that vary the distance between the arms 36 containing the friction element 4.

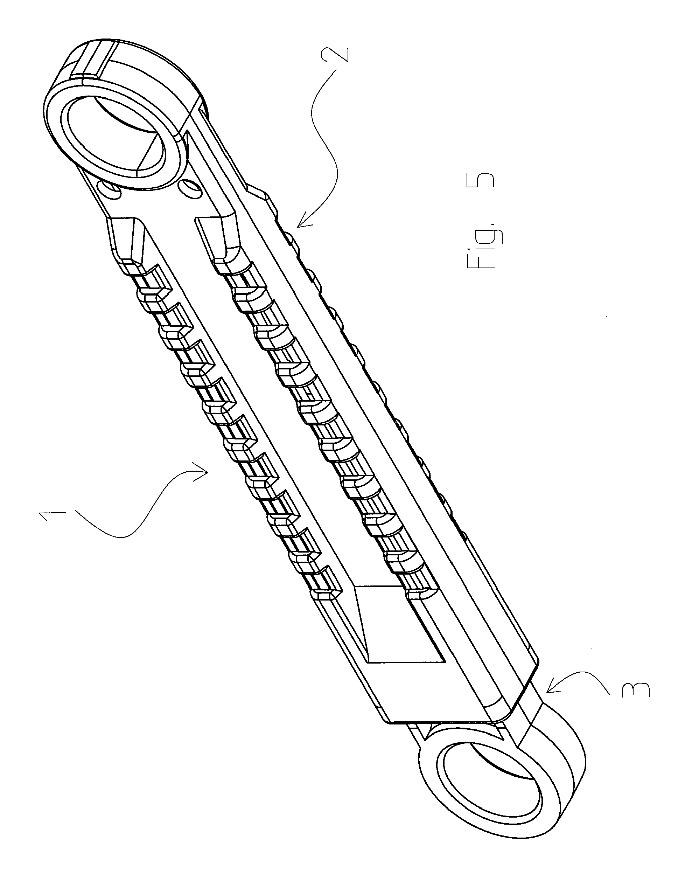

In fact, once the damper 1 is assembled according to the present invention (see figure 5), the frictional force achieved by the friction element 4 against the internal surface of the middle portions 21 A of the larger walls 21 of the hollow body 2 will be greater or lesser depending on the larger or smaller bulging of the friction element 4 or, in other words, on the larger or smaller compression achieved by the pushing elements 5 through the arms 36.

In addition, advantageously the holes 41 work as a sort of pump that alternately releases and reabsorbs the lubricant. In other words, during the axial movement of the rod 3 outward from the hollow body 2, as in figure 4B, the part of the holes 41 positioned near the joining means 38, 39 undergoes a compression exerted by the pushing elements 5. Such compression produces the outflow of a quantity of lubricant. The moment when the axial displacement is reversed, that is inwardly in the body 2, said holes 41 expand and draw in part of the lubricant that was released with the previous compression. At the same time, as shown in figure 4A, the holes 41 opposite the joining means 38, 39 undergo a compression exerted by the corresponding pushing elements 5 (figure 4A). As previously, there is a release of lubricant. When the movement is reversed, the holes 41 expand and suck back part of the lubricant that was previously released.

The operation as just described is thus repeated cyclically in alternating compressions and expansions of the holes that work as a sort of reservoir releasing and absorbing the lubricant. The effect just described makes it possible to advantageously maintain a further automatic and optimal control of the correct lubrication of the parts involved in the braking or frictional action.

It was found experimentally that the greater the compression caused by the pushing elements 5 on the friction element 4, the greater is the elastic expansion of the same friction element, and thus the frictional value is also greater. This reaction is therefore not constant but varies in proportion of the unbalance to be dampened. In this manner, an automatic adjustment of the braking capacity of the damper is ensured.

Both the rod 3 and the hollow body 2 are conventionally made up of polymeric material of suitable rigidity.

From the above, it is thus evident how a friction damper 1 according to the present invention resolves the previously mentioned drawbacks and achieves important advantages.

In the first place, it is possible to adjust the damping capacity by tightening or loosening the joining means 38, 39 of the two arms 36 that hold the friction element 4. This operation is particularly simple, thanks to the prearrangement of joining means with snap engagement and possible shape coupling provided directly on the arms that hold the friction element.

The engagement and disengagement of the joining means involve simple operations and do not require the replacement of different pieces that must be adapted each time.

The number of components is consequently reduced, with a simplification of the damper and a reduced risk of breakages or malfunctions inherent in complex structures whose components must be perfectly calibrated.

The adjustment of the compression of the friction element can be achieved in a precise manner and in a wide range of variables to meet numerous different conditions of use.

Furthermore, the simplification of the components ensures a marked reduction of the risk of noise generation from the machines on which the damper is applied, especially at undesired times of the day.

In addition, the presence of holes further increases the compression capacity of the braking element when conditions require it.

The even and constant distribution of lubricant on all the surface of the friction element through said holes functioning as lubricant reservoir and release and absorption means makes it possible to maintain advantageously optimum conditions of operation of the damper. In fact, through the storage of lubricant it is possible to have a supply of lubricant that, thanks to the above-mentioned "reservoir" effect, is released and absorbed during its whole life cycle, as the efficiency is maintained unchanged and the risk of excessive and early wear of the sliding parts is avoided, as well as harmful overheating of the damper.

Further, said friction damper 1 can be made simply and economically with the usual well-known systems, machines and equipment, while guaranteeing a reliable operation.

Variants or modifications of the damper described above are possible for a person skilled in the field without departing from the scope of patent protection of the present invention as defined in the enclosed claims.

For example, shapes can be modified according to particular demands or preferences. In fact, the cross section of the hollow body and of the rod can, for example, be square or cylindrical, so that the friction element can be in the form of a cube or a sphere.

The hollow body may include fins to further dissipate heat generated by friction, which fins can also work as reinforcing ribs in case of dampers subjected to strong stresses.

The plastic materials with which the hollow body and the rod are made can be chosen from conventional plastic materials such as, for example, polypropylene and polyamide, possibly reinforced with mineral and/or natural or synthetic fibres. The friction element, on the other hand, can be made of natural or synthetic rubber, preferably foamed, such as foam polyurethane and ethyl vinyl acetate (EVA).

The adjustable joining means 38, 39 can be in the form of automatic pressure snap buttons.

The through holes 41 of the friction element 4 can be of various shapes. In the figures, they are shown as having a circular shape, but they can also be oval or polygonal, depending on particular demands or preferences.

Although the friction damper described herein is preferably used in a laundry washing machine, it is understood that it can be used for different applications, as may be required.

## Claims

1. Friction damper (1) extending longitudinally along an axis (X-X), comprising a hollow body (2) having a first closed end (22) provided with a fixing element (23) and a second open end (24), a rod (3) for slidably engaging the inner wall of said hollow body (2), said rod having a first closed end (31) provided with a fixing element (32) and being connected to a second end (33) for engaging the cavity of the hollow body (2) through a middle portion (34), and at least a friction element (4) between the inner wall of the hollow body and the outer wall of the rod, **characterized in that** said second end (33) of the rod (3) is provided with flexible arms (36) for retaining said friction element (4), whose free ends (37) comprise reversible and adjustable joining means (38, 39) to fix said arms (36) in a position where they operate a major or minor compression of said friction element (4).

2. Friction damper (1) according to claim 1, wherein said joining means (38, 39) are coupling joining means.

3. Friction damper (1) according to claim 2, wherein the coupling joining means are a toothed pin (38) engaging two corresponding toothed jaws (39).

4. Friction damper (1) according to claim 3, wherein said teeth of the pin (38) have a pushing surface (38A) inclined towards the engaging direction and a corresponding undercut (38B), while the teeth of the jaws have similar pushing surfaces (39A) inclined in the opposite direction and corresponding undercuts (39B).

5. Friction damper (1) according to any one of claims 1 to 4, wherein said second end (33) comprises a portion (35) shaped as a loop with said two flexible arms (36) and pushing or abutting elements (5) penetrating into the friction element (4) to cause its bulging, as a non-constant reaction but variable proportionally to the unbalance of the damper.

6. Friction damper (1) according to claim 5, wherein said pushing elements (5) are ribs protruding towards the middle of the portion shaped as a loop (35).

7. Friction damper (1) according to claim 6, wherein said ribs are in two couples, one with the respective ribs facing one to the other along the axis (X-X) of the damper and the other with the respective ribs facing one to the other perpendicularly to said axis.

8. Friction damper (1) according to any one of claims 1 to 7, wherein said friction element (4) is provided with a plurality of through holes (41) having the triple function of reservoir for accumulating a lubricant to allow the gradual release and recovery of part of said lubricant onto the whole friction surface of the friction element, of dissipating heat produced during the functioning, and of sound-adsorption.

9. Friction damper (1) according to claim 1 to 8, wherein the hollow body (2) has a generally rectangular section with two major opposed walls (21) having a middle portion (21 A) lowered towards the interior to engage the friction element (4) and two lateral portions (21 B) drilled to dissipate heat.

10. Laundry treatment machine comprising at least one friction damper (1) according to any one of claims 1 to 9.
